# EUROPÄISCHE PATENTANMELDUNG

(11) **EP 1 935 548 A2**
(43) Veröffentlichungstag der Anmeldung: **25.06.2008**
(21) Anmeldenummer: 07123632.7
(22) Anmeldetag: 19.12.2007
(51) Int. Cl.: B23K 9/29, B23K 9/32

(54) **Reinigungsstation und Verfahren zur automatischen Reinigung der Gasdüse eines Schweißbrenners einer automatischen Schweißanlage**

(30) Priorität: 20.12.2006 DE 102006060939
(71) Anmelder: ThyssenKrupp Drauz Nothelfer GmbH, 74076 Heilbronn (DE)
(72) Erfinder: Jäck, Kurt, 88326, Aulendorf (DE); Arnold, Roland, 88289 Waldburg (DE); Sättele, Wolfgang, 88250, Weingarten (DE)
(74) Vertreter: Cohausz & Florack

(57) **Zusammenfassung**

Die Erfindung betrifft eine Reinigungsstation zur automatischen Reinigung der Gasdüse (3) eines Schweißbrenners einer automatischen Schweißanlage, insbesondere einer automatischen Schutzgasschweißanlage, mit Haltemitteln (4) zum Fixieren der zu reinigenden Gasdüse (3) und mit wenigstens einer Reinigungseinheit (5) zur Reinigung der Innenfläche (3b) der zu reinigenden Gasdüse (3), wobei die wenigstens eine Reinigungseinheit (5) als mechanische Reinigungseinheit ausgebildet ist und die die Gasdüse (3) fixierenden Haltemittel (4) und die wenigstens eine Reinigungseinheit (5) derart relativ zueinander ausrichtbar sind, dass die wenigstens eine Reinigungseinheit (5) in das mit dem Schweißbrennerrohr (1) des Schweißbrenners verbindbare offene Ende (3d) der Gasdüse (3) zwecks Reinigung der Innenfläche (3b) der Gasdüse (3) einführbar ist. Die Reinigungsstation ist erfindungsgemäß dadurch gekennzeichnet, dass die Haltemittel (4) von einer ersten Position, in der die zu reinigende Gasdüse (3) durch die Haltemittel (4) aufgenommen wird, in eine zweite Position, in der die mechanische Reinigungseinheit (5) in die Gasdüse eingeführt wird, verschwenkbar sind. Ferner betrifft die Erfindung ein Verfahren zur automatischen Reinigung der Gasdüse (3) eines Schweißbrenners einer automatischen Schweißanlage sowie eine automatische Schweißanlage.

## Beschreibung

Die Erfindung betrifft eine Reinigungsstation zur automatischen Reinigung der Gasdüse eines Schweißbrenners einer automatischen Schweißanlage, insbesondere einer automatischen Schutzgasschweißanlage, mit Haltemitteln zum Fixieren der zu reinigenden Gasdüse und mit wenigstens einer Reinigungseinheit zur Reinigung der Innenfläche der zu reinigenden Gasdüse, wobei die wenigstens eine Reinigungseinheit als mechanische Reinigungseinheit ausgebildet ist und die die Gasdüse fixierenden Haltemittel und die wenigstens eine Reinigungseinheit derart relativ zueinander ausrichtbar sind, dass die wenigstens eine Reinigungseinheit in das mit dem Schweißbrennerrohr des Schweißbrenners verbindbare offene Ende der Gasdüse zwecks Reinigung der Innenfläche der Gasdüse einführbar ist. Ferner betrifft die Erfindung ein Verfahren zur automatischen Reinigung der Gasdüse eines Schweißbrenners einer automatischen Schweißanlage und eine automatische Schweißanlage.

Automatische Schweißanlagen, insbesondere robotergestützte Schweißanlagen, werden seit Jahren standardmäßig und mit großem Erfolg in der produzierenden Industrie, insbesondere in der Automobilindustrie, eingesetzt. Die hohe Wiederholgenauigkeit der eingesetzten Mehrachsen-Handhabungssysteme qualifiziert automatische Schweißanlagen für den Einsatz in Produktionsanlagen, wo es auf höchste Fügepräzision ebenso wie auf die Fertigung großer Stückzahlen im Zwei- und Dreischichtbetrieb ankommt.

Beim modernen Lichtbogenschweißverfahren, z.B. dem Metall-Inertgas-Schweißen (MIG) oder dem Metall-Aktivgas-Schweißen (MAG) wird ein im Schweißprozess abschmelzender Draht durch ein Kontaktrohr in die Schweißzone gefördert, wobei das Kontaktrohr von einer Gasdüse umgeben ist, aus der über einen ringförmigen Auslass das Inert- bzw. Aktivgas austritt. Um eine geeignete Formung des Gasstrahls zu erreichen, ist die Gasdüse in Richtung des Gasauslasses in vielen Fällen konisch zulaufend geformt.

Im Zuge des automatischen Fügeprozesses insbesondere von verzinkten Karosserieblechen kommt es durch aufspritzende Metalltröpfchen zu einer stetigen Verunreinigung der Gasdüse und des Kontaktrohrs. Die durch die Metallspritzer gebildeten Verunreinigungen verändern die Geometrie des durch die Innenfläche der Gasdüse und die Außenfläche des Kontaktrohrs begrenzten Gaskanals und führen somit zu Störungen in der Gasströmung und in der Konsequenz zu einem verschlechterten Schweißergebnis. In einem praktischen Fall in der Automobilindustrie werden in einem automatischen Schutzgasschweißverfahren Türscharniere an eine voll verzinkte Karosserie angeschweißt, wobei es zu den vorstehend erwähnten stetig auftretenden Verunreinigungen der Gasdüse und des Kontaktrohrs des Schweißbrenners kommt. Die Verunreinigungen haben zur Folge, dass der Schweißprozess im Schnitt nach jeder siebten geschweißten Karosserie unterbrochen werden muss, um eine Reinigung der Gasdüse auf manuellem Wege vorzunehmen. Hierzu muss der Schweißprozess unterbrochen und der den Prozess überwachende Anlagenführer in die Sicherheitszone des Schweißroboters eintreten, um die Gasdüse manuell vom Schweißbrenner abzuziehen und einer manuellen mechanischen Reinigung zu unterziehen.

Es besteht folglich hoher Bedarf an einer Automatisierung der Gasdüsenreinigung, um die Ausfallzeiten beim automatisierten Schweißen zu verkürzen und gleichzeitig die Arbeitssicherheit zu erhöhen.

Aus dem Stand der Technik sind dazu verschiedene Vorrichtungen zur Reinigung eines Schutzgasschweißbrenners bekannt. So ist in der DE 32 38 918 A1 eine Vorrichtung zur automatischen Reinigung eines Schutzgasschweißbrenners beschrieben, bei der der zu reinigende Schweißbrenner in eine in der Vorrichtung vorgesehene Öffnung eingeführt wird, wobei ein auf einer rotierenden Welle befestigtes Reinigungswerkzeug in den zwischen Kontaktrohr und Gasdüse gebildeten Ringkanal eingreift und die Verunreinigungen an der Innenfläche der Gasdüse und der Außenfläche des Kontaktrohrs abschabt. Dadurch, dass das Reinigungswerkzeug durch die ringförmige Gasauslassöffnung der Gasdüse in diese eingeführt wird, ist es insbesondere bei konisch geformten Gasdüsen aufgrund der schwer zugänglichen Düseninnenfläche schwierig, dort eine vollständige Abreinigung von Schweißrückständen zu erreichen.

In der DD 290 157 A5 ist eine Reinigungseinrichtung für Schweißbrenner beschrieben, bei der die Reinigung der Innenfläche einer zylindrischen Gasdüse durch ein fluides Reinigungsmedium erfolgt. Hierzu wird die Gasdüse durch einen Greifer vom Schweißbrenner getrennt und durch eine gereinigte Gasdüse ersetzt. Parallel zum fortgesetzten Schweißprozess erfolgt dann die Düsenreinigung mit dem fluiden Reinigungsmedium. Nachteilig an diesem Stand der Technik ist das unzureichende Reinigungsergebnis bei hartnäckigen Verschmutzungen, insbesondere bei Schweißspritzern. Ferner bedingt eine Reinigung der Gasdüse auf Basis eines fluiden Reinigungsmediums eine entsprechende Entsorgung oder Aufbereitung des kontaminierten Reinigungsmediums.

Aus der US 4,733,050 ist eine Reinigungsstation zur automatischen Reinigung einer Gasdüse eines Schweißbrenners bekannt, bei der eine von einem robotergeführten Schweißbrenner gehaltene Gasdüse zur Reinigung der Innenfläche der Gasdüse von oben in einen Verriegelungsmechanismus eingeführt wird, in dem sie, nachdem der Schweißbrenner nach oben abgezogen wurde, um einer weiteren Bearbeitung zugeführt zu werden, an ihrer Innenfläche von einer Reinigungseinheit in Form einer rotierenden Bürste gereinigt wird. Hierbei wird von unten die Reinigungseinheit über die kleine Gasauslassöffnung in die Gasdüse zum Zwecke der Reinigung eingeführt, was insbesondere bei konischen Gasdüsen zu den bekannten Qualitätsproblemen bei der Reinigung führt.

In der DE 201 15 284 U1 ist eine weitere automatische Düsenreinigungsvorrichtung für Schutzgasschweißgeräte beschrieben. Bei dieser wird der die Gasdüse tragende Düsenstock von oben in ein sog. Düsenabdrehkopfmodul eingeführt, in welchem die Schraubverbindung zwischen der Gasdüse und dem Düsenstock durch Drehen der Gasdüse gelöst wird. Nachdem die Verbindung zwischen Düse und Düsenstock getrennt ist, wird der Düsenstock nach oben abgezogen, wobei die Gasdüse in dem Düsenabdrehkopfmodul weiter um ihre Achse rotiert. Die Reinigung der Düseninnenfläche erfolgt dann unter Beibehaltung der Drehbewegung, indem ein eine nicht rotierende Bürste umfassendes Düseninnenreinigungsmodul eingeschwenkt und gleichzeitig in die offene, rotierende Düse abgesenkt wird. Zwar hat diese Vorrichtung den Vorteil, dass die Düseninnenfläche über die große dem Düsenstock zugewandte Öffnung gereinigt wird, so dass auch bei konischen Düsen die gesamte Innenfläche gut erreichbar ist, jedoch müssen besondere Vorkehrungen getroffen werden, um die abgereinigten Schweißspritzer aus der Düse zu entfernen, bevor sie wieder mit dem Düsenstock verbunden wird.

Der Erfindung liegt die Aufgabe zugrunde, eine Reinigungsstation zur automatischen Reinigung der Gasdüse eines Schweißbrenners einer automatischen Schweißanlage der eingangs genannten Art anzugeben, die eine vollautomatische Reinigung der Gasdüse in kurzer Zeit ermöglicht, so dass einerseits die Unterbrechungszeiten beim automatischen Schweißprozess verkürzt und andererseits die Arbeitszyklen, d.h. die Zeitdauer, in der der Schweißprozess ununterbrochen durchgeführt werden kann, verlängert werden. Ferner soll durch den Einsatz einer solchen Reinigungsstation die Gefahr von Arbeitsunfällen verringert werden.

Die Aufgabe wird erfindungsgemäß mit einer Reinigungsstation nach dem Oberbegriff des Patentanspruches 1 dadurch gelöst, dass die Haltemittel von einer ersten Position, in der die zu reinigende Gasdüse durch die Haltemittel aufgenommen wird, in eine zweite Position, in der die mechanische Reinigungseinheit in die Gasdüse eingeführt wird, verschwenkbar sind.

Die erfindungsgemäße Reinigungsstation verbindet die Vorteile des mechanischen Reinigens einerseits und des fluidbasierten Reinigens andererseits unter Vermeidung der spezifischen Nachteile der jeweiligen Reinigungsverfahren. So ist durch den Einsatz einer mechanischen Reinigungseinheit eine besonders gründliche Reinigung auch von hartnäckigen Verunreinigungen möglich. Dabei ist durch die Zugänglichkeit des mit dem Schweißbrennerrohr verbindbaren offenen Endes der Gasdüse durch entsprechendes relatives Ausrichten von Reinigungseinheit und Haltemitteln sichergestellt, dass auch bei konisch zulaufenden Gasdüsen sämtliche Bereiche der Innenfläche der Gasdüse durch die mechanische Reinigungseinheit erreicht und gereinigt werden können. Da die Reinigungsstation ohne den Einsatz von Reinigungsfluiden arbeitet, fallen lediglich die abgereinigten Verunreinigungen zur Entsorgung an. Durch den vollautomatischen Betrieb der Reinigungsstation, die vollständig ohne manuellen Eingriff auskommt, lassen sich die Unterbrechungszeiten beim automatischen Schweißbetrieb, beispielsweise in einer Automobil-Fertigungsstraße, entscheidend verkürzen. Lediglich der Zeitpunkt der automatischen Reinigung in der erfindungsgemäßen Reinigungsstation wird durch den erfahrenen Anlageführer festgelegt. Da der Anlagenführer zur Durchführung der Reinigung nicht mehr in den Wirkungsbereich des den Schweißbrenner führenden Handhabungssystems der automatischen Schweißanlage eintreten muss, ist die Gefahr von Arbeitsunfällen entscheidend reduziert.

Erfindungsgemäß ist ferner vorgesehen, dass die Haltemittel zusätzlich von einer ersten Position, in der die zu reinigende Gasdüse durch die Haltemittel aufgenommen wird, in eine zweite Position, in der die mechanische Reinigungseinheit in die Gasdüse eingeführt wird, verschwenkbar ausgebildet sind. Durch den Einsatz eines geeigneten Schwenkmechanismus ist es möglich, die Gasdüse in einer ersten Schwenkposition der Haltemittel aufzunehmen und nach dem Lösen der Verbindung zwischen der Gasdüse und dem Schweißbrennerrohr in eine zweite Schwenkposition zu überführen, in der die mechanische Reinigungseinheit in die Gasdüse über die dem Schweißbrenner zugewandten Öffnung der Gasdüse eingeführt wird.

Beispielsweise ist es vorteilhaft, die Gasdüse in einer horizontalen Position aufzunehmen und sodann in eine vertikale Position zu verschwenken, in der die mechanische Reinigungseinheit von unten in die Gasdüse eingeführt wird, so dass während des Reinigungsprozesses die abgereinigten Verunreinigungen direkt nach unten aus der Gasdüse herausfallen können, was insbesondere bei konisch geformten Gasdüsen von Vorteil ist, da hierbei die Verunreinigungen einfach durch die große Öffnung herausfallen können, ohne dass die Gefahr besteht, dass sich die Öffnung durch abgereinigte Verunreinigungen zusetzt.

Vorzugsweise umfasst die Reinigungsstation eine Steuereinheit, wobei die Steuereinheit mit einer Steuereinheit der automatischen Schweißanlage verbindbar ist zum Zwecke der gemeinsamen Steuerung der Schweißanlage und der Reinigungsstation über die Steuereinheit der Schweißanlage. Hierdurch kann die automatische Reinigung der Gasdüse in dem Programmablauf der automatischen Schweißanlage integriert werden und, wie vorstehend beschrieben, manuell eingeleitet oder auch nach einer vorgebbaren Anzahl von Schweißvorgängen automatisch ausgelöst werden. Im Falle des Einsatzes eines Schweißroboters kann die Reinigungsstation also auch über die Schweißrobotersteuerung gesteuert werden.

Die in der erfindungsgemäßen Reinigungsstation vorgesehenen Haltemittel zum Fixieren der zu reinigenden Gasdüse können auf verschiedene Weise ausgeführt sein. Bevorzugt sind sie als pneumatisch, elektrisch oder hydraulisch betätigbare Klemmbacken ausgebildet. Hierdurch kann eine ausreichende Haltekraft ausgeübt werden, so dass die Gasdüse in definierter Lage gehalten werden kann, während die mechanische Reinigung ihrer Innenfläche durch die mechanische Reinigungseinheit durchgeführt wird.

Die mechanische Reinigungseinheit kann ihrerseits als rotierender Fräskopf oder als Draht oder Bürste ausgebildet sein. Entscheidend ist für die Auswahl der jeweiligen Reinigungseinheit, dass sie die in der Gasdüse anhaftenden Verunreinigungen vollständig entfernen kann und gleichzeitig nicht das Düsenmaterial durch übermäßige mechanische Beanspruchung angreift.

Um eine vollständige Reinigung des Schweißbrenners zu erreichen, kann es je nach Düsenform auch sinnvoll sein, parallel zur Reinigung der Innenfläche der Gasdüse die Außenfläche des von der Gasdüse umgebenden Kontaktrohrs durchzuführen. Da die Gasdüse während der Reinigung in der erfindungsgemäßen Reinigungsstation von dem Schweißbrenner getrennt ist, ist das Kontaktrohr während der Reinigung der Gasdüse uneingeschränkt zugänglich. Entsprechend ist nach einer weiteren vorteilhaften Lehre der Erfindung vorgesehen, dass die Reinigungsstation wenigstens eine weitere mechanische Reinigungseinheit zur Reinigung der Außenfläche des Kontaktrohrs des Schweißbrenners umfasst. Diese kann wiederum als Fräskopf oder als Draht oder Bürste ausgebildet sein.

Neben einer vollständigen Reinigung wird auch stets angestrebt, eine erneute Verunreinigung der Gasdüse und auch des Kontaktrohrs in den folgenden Schweißprozessen möglichst zu minimieren. Hierzu ist es vorteilhaft, an der erfindungsgemäßen Reinigungsstation einen Einheit zum Auftragen eines Trennmittels auf die Innenfläche der Gasdüse und/oder die Außenfläche des Kontaktrohrs des Schweißbrenners vorzusehen. Die Einheit zum Auftragen des Trennmittels ist dabei vorzugsweise als Sprühvorrichtung ausgebildet. Dabei ist die Sprühvorrichtung bevorzugt fluchtend mit den die Gasdüse fixierenden Haltemitteln angeordnet, so dass der durch das Handhabungssystem der automatischen Schweißanlage geführte Schweißbrenner unmittelbar nach dem Wiederandocken der gereinigten Gasdüse an das Schweißbrennerrohr mit dem Trennmittel eingesprüht werden kann, ohne dass eine weitere zustellbewegung erforderlich ist. Es versteht sich, dass die Sprühvorrichtung auch an anderer Stelle der Reinigungsstation angeordnet sein kann. Hierzu muss der Schweißbrenner nach Andocken der Gasdüse dann entsprechend in eine andere Position verfahren werden.

Für einen exakten zündvorgang ist es wichtig, dass nach Unterbrechung des Schweißprozesses, beispielsweise zum Zwecke der Düsenreinigung, der Abbrand an dem Schweißdraht abgeschnitten wird. Die freie Schweißdrahtlänge sollte von der Auslassöffnung des Kontaktrohrs zur Schweißdrahtspitze stets gleich sein, wobei eine Länge von ca. 15 mm bevorzugt wird. Zum Zwecke der Entfernung des Schweißdrahtabbrands und der geeigneten Ablängung der Schweißdrahtspitze ist nach einer weiteren vorteilhaften Ausgestaltung der Erfindung vorgesehen, dass die Reinigungsstation eine Vorrichtung zum Abschneiden eines Teils des aus dem Kontaktrohr herausragenden Schweißdrahtendes umfasst. Die Auswahl der jeweiligen Vorrichtung zum Drahtabschneiden richtet sich nach dem jeweils gewählten Schweißdrahtdurchmesser und seiner Festigkeit.

Nach erfolgter Reinigung der Gasdüse kann es erforderlich sein, den Tool-Center-Point (TCP) des durch ein Mehrachsen-Handhabungssystem geführten Schweißbrenners neu zu kalibrieren, wenn es beispielsweise zuvor zu einer Kollision mit dem Werkstück oder mit einem anderen Teil im Wirkungsbereich der automatischen Schweißanlage gekommen ist. Hierzu ist nach einer weiteren vorteilhaften Lehre der Erfindung vorgesehen, dass die Reinigungsstation eine Einheit zur Rekalibrierung des TCP der automatischen Schweißanlage umfasst. Vorzugsweise ist diese Einheit als optischer Sensor ausgebildet.

Der Erfindung liegt weiterhin die Aufgabe zugrunde, eine automatische Schweißanlage nach dem Oberbegriff des Patentanspruches 26 anzugeben, welche derart konstruiert ist, dass eine besonders einfache und vollständige Reinigung der an dem Schweißbrennerrohr vorgesehenen Gasdüse in kurzer Zeit möglich ist.

Die Aufgabe wird erfindungsgemäß mit einer automatischen Schweißanlage nach Oberbegriff des Patentanspruches 26 dadurch gelöst, dass die Verbindung zwischen der Gasdüse und dem Schweißbrennerrohr nach Art einer Schnappverbindung durch eine axial an der Verbindung angreifende Kraft lösbar und schließbar ist.

Durch die erfindungsgemäß gewählte Verbindung zwischen der Gasdüse und dem Schweißbrennerrohr ist ein schnelles automatisches An- und Abkoppeln der Gasdüse von dem Schweißbrennerrohr möglich. So kann die Gasdüse in einem Haltemittel, beispielsweise einem Haltemittel einer Reinigungsstation der vorstehenden Art, fixiert werden, woraufhin das Schweißbrennerrohr durch das Mehrachsen-Handhabungssystem einfach unter Aufwendung einer axialen Kraft, die eine durch die konkrete Ausgestaltung der Verbindung vorgegebene Lösekraft übersteigen muss, zurückgezogen wird, wodurch die Verbindung gelöst wird. Folglich eignet sich die erfindungsgemäß vorgesehene Verbindung zwischen der Gasdüse und dem Schweißbrennerrohr insbesondere für eine Übergabe der Gasdüse an eine Reinigungsstation zum Zwecke der Abreinigung von Schweißrückständen. Der Einsatz weiterer Effektoren, beispielsweise zum Lösen einer Schraubverbindung oder zum Verschieben einer Verriegelungshülse ist entsprechend nicht erforderlich. Allein eine Gasdichtigkeit der Verbindung muss gewährleistet sein.

Nach einer vorteilhaften Ausgestaltung der erfindungsgemäßen automatischen Schweißanlage umfasst das Schweißbrennerrohr ein erstes Kupplungselement, welches ein an der Gasdüse vorgesehenes zweites Kupplungselement aufnimmt. Um das Einführen der Gasdüse in das Schweißbrennerrohr zu vereinfachen, weist das erste Kupplungselement dabei bevorzugt eine konisch zulaufende Innenfläche und das zweite Kupplungselement eine dazu entsprechend konisch zulaufende Außenfläche auf.

Hinsichtlich einer konkreten konstruktiven Ausgestaltung der Kupplungselemente ist bevorzugt das erste Kupplungselement als Muffe mit einem inneren Federring ausgebildet, wobei an dem zweiten Kupplungselement eine Ringnut vorgesehen ist, in die der Federring einrasten kann.

Die Gasdüse selbst kann unterschiedliche geometrische Formen aufweisen. So sind zylindrische Formen ebenso möglich wie eine konische Form, bei der die Gasdüse ein konisch zulaufendes Gasaustrittsende aufweist. Die konische Düsenform wird aus strömungstechnischer Sicht in der Regel bevorzugt.

Die Schweißanlage insgesamt kann als MIG/MAG-Schweißanlage ausgebildet sein, wobei ein Schweißdraht durch das Kontaktrohr geführt wird. Alternativ kann sie als WIG-Schweißanlage ausgebildet sein, wobei die wolframelektrode in dem Kontaktrohr gehalten ist.

Der Erfindung liegt weiterhin die Aufgabe zugrunde, ein Verfahren zur automatischen Reinigung der Gasdüse eines Schweißbrenners einer automatischen Schweißanlage anzugeben, welche eine vollautomatische und vollständige Reinigung der Gasdüse in einem kurzen zeitintervall ermöglicht.

Die Aufgabe wird erfindungsgemäß mit einem Verfahren gemäß dem Oberbegriff des Patentanspruches 23 gelöst, welches folgende Schritte umfasst:
- Einführen der mit dem Schweißbrennerrohr verbundenen Gasdüse in an der Reinigungsstation vorgesehene Haltemittel,
- Einklemmen der Gasdüse in den Haltemitteln, Lösen der Verbindung zwischen Gasdüse und Schweißbrennerrohr und Abziehen des Schweißbrennerrohrs, wobei die Gasdüse durch die Haltemittel weiter gehalten wird,
- Verschwenken der Haltemittel aus der ersten Position in eine zweite Position,
- Einführen wenigstens einer an der Reinigungsstation vorgesehenen mechanischen Reinigungseinheit in das mit dem Schweißbrennerrohr des Schweißbrenners verbindbare offene Ende der Gasdüse, Reinigung der Innenfläche der Gasdüse, Verschwenken der Haltemittel zurück in die erste Position und anschließendes Herausbewegen der wenigstens einen Reinigungseinheit aus der gereinigten Gasdüse,
- Wiederherstellen der Verbindung zwischen dem Schweißbrennerrohr und der Gasdüse
- Lösen der Klemmverbindung zwischen der Gasdüse und den Haltemitteln und
- Bewegen des Schweißbrennerrohrs in eine Bereitschafts- oder Arbeitsposition.

Das erfindungsgemäße Verfahren ermöglicht eine vollautomatische Gasdüsenreinigung in kürzester Zeit ohne manuellen Eingriff. Im Übrigen gilt für die Vorteile des erfindungsgemäßen Verfahrens sowie für dessen vorteilhafte Ausgestaltungen das vorstehend Gesagte.

Im Folgenden wird die Erfindung anhand einer Ausführungsbeispiele darstellenden Zeichnung näher erläutert.

Es zeigen:
- Fig. 1: das Schweißbrennerrohr eines Schweißbrenners einer erfindungsgemäßen automatischen Schweißanlage mit Kontaktrohr und Gasdüse,
- Fig. 2: das Schweißbrennerrohr aus Fig. 1 mit in einem Klemmbackenpaar einer erfindungsgemäßen Reinigungsstation fixierter Gasdüse,
- Fig. 3: das Schweißbrennerrohr aus Fig. 1 mit abgetrennter Gasdüse,
- Fig. 4: eine automatische Schutzgasschweißanlage mit einem Schweißbrennerrohr gemäß Fig. 1 und einer erfindungsgemäßen Reinigungsstation zur automatischen Reinigung der Gasdüse des Schweißbrennerrohrs in Seitenansicht und
- Fig. 5: die Reinigungsstation aus Fig. 4 in Vorderansicht.

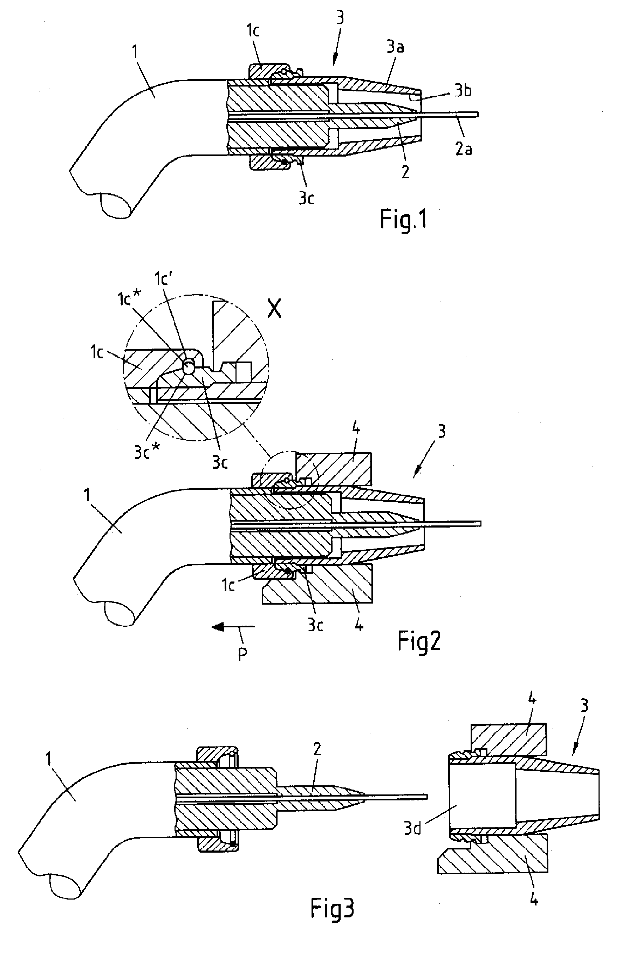

In Fig. 1 ist das Schweißbrennerrohr 1 einer erfindungsgemäßen automatischen Schutzgasschweißanlage, vorliegend einer MIG/MAG-Schweißanlage, dargestellt. In koaxialer Verlängerung des Schweißbrennerrohrs 1 ist ein Kontaktrohr 2 angeordnet, welches von einem Schweißdraht 2a durchsetzt wird, welcher während des Schweißprozesses kontinuierlich in die Prozesszone gefördert wird. Das Kontaktrohr 2 umgibt koaxial eine lösbar mit dem Schweißbrennerrohr 1 verbundene Gasdüse 3. Die Gasdüse weist ein konisches vorderes Ende 3a auf, dessen Innenfläche 3b ebenfalls konisch ausgebildet ist.

Das Schweißbrennerrohr 1 und die Gasdüse 3 sind lösbar miteinander verbunden. Erfindungsgemäß ist diese lösbare Verbindung nach Art einer Schnappverbindung ausgebildet, wobei die Verbindung durch eine axial an der Verbindung angreifende Kraft lösbar oder schließbar ist. Dies bedeutet, dass beispielsweise die Verbindung dadurch geöffnet werden kann, dass die Gasdüse durch ein Haltemittel, wie in Fig. 2 angedeutet, fixiert wird, während auf das Brennerrohr 1 eine axiale Zugkraft ausgeübt wird, die, sobald eine durch die konkrete Ausgestaltung der Verbindung vorgegebene Mindestkraft überschritten wird, zu einem Lösen der Verbindung führt.

Die Ausgestaltung der Verbindung ist in Fig. 2 im Detail dargestellt (Einzelheit X). Sie wird gebildet durch ein am Schweißbrennerrohr 1 vorgesehenes erstes Kupplungselement 1c, welches ein an der Gasdüse 3 vorgesehenes zweites Kupplungselement 3c aufnimmt. Um das Einführen des zweiten Kupplungselementes 3c der Gasdüse 3 in das erste Kupplungselement 1c des Schweißbrennerrohrs 1 zu vereinfachen, sind die im verbundenen Zustand aneinander liegenden Flächen der Kupplungselemente 1c, 3c konisch ausgebildet, wie in der Einzelheit X der Fig. 2 erkennbar. Um die Verbindung zwischen dem ersten und dem zweiten Kupplungselement 1c, 3c herzustellen, weist das erste Kupplungselement 1c eine in die konische Innenfläche des ersten Kupplungselements 1c eingeformte Ringnut 1c' auf, in der ein Federring 1c* gelagert ist.

Wird nun das zweite Kupplungselement 3c in das erste Kupplungselement 1c eingeführt, so weitet die konische Außenfläche des zweiten Kupplungselements 3c den Federring 1c* sukzessive auf, wobei der geweitete Federring 1c* in die Ringnut 1c', in der er gelagert ist, zurückweicht. In der konischen Außenfläche des zweiten Kupplungselement 3c ist ebenfalls eine Ringnut 3c* eingeformt, in die der Federring 1c* einrastet, sobald das zweite Kupplungselement 3c hinreichend weit in das erste Kupplungselement 1c eingeführt ist. Hierdurch wird die Verbindung zwischen den Kupplungselementen 1c, 3c und entsprechend dem Schweißbrennerrohr 1 und der Gasdüse 3 geschlossen.

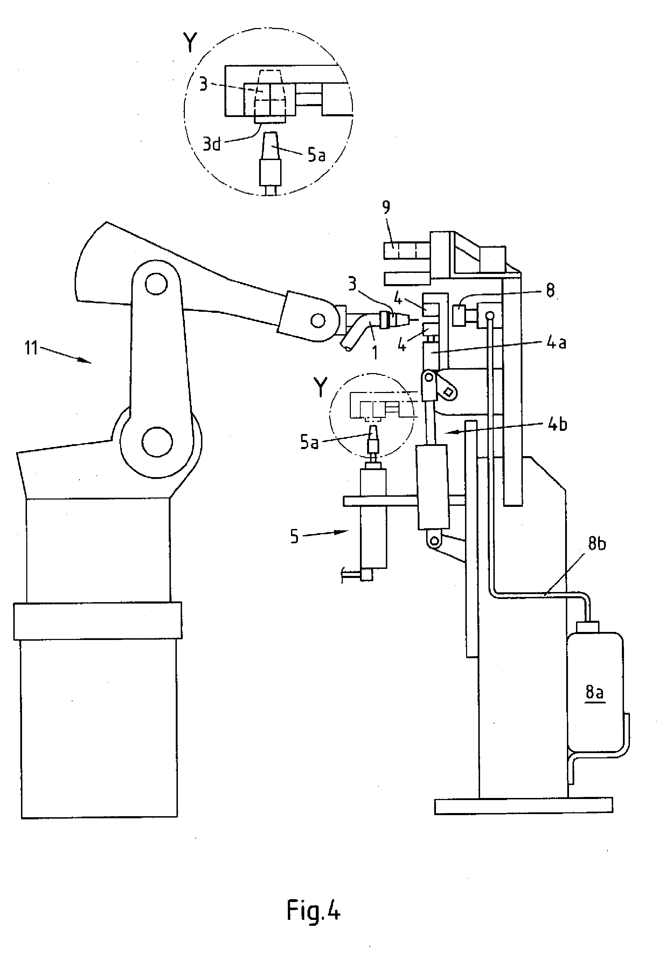

Wie in den Fig. 2 und 3 dargestellt, wird die Gasdüse 3 durch als Klemmbacken 4 ausgebildete Haltemittel der im Folgenden beschriebenen erfindungsgemäßen Reinigungsstation fixiert. Wird nun durch einen das Schweißbrennerrohr 1 führenden Schweißroboter 11 (vgl. Fig. 4) eine in Richtung des Pfeils P (vgl. Fig. 2) wirkende axiale Kraft auf die Verbindung zwischen der Gasdüse 3 und dem Schweißbrennerrohr 1 ausgeübt, so wird die Verbindung getrennt und das Schweißbrennerrohr 1 bei ortsfest gehaltener Gasdüse 3 abgezogen, wie in Fig. 3 dargestellt.

In Fig. 4 ist auf der rechten Seite eine erfindungsgemäße Reinigungsstation zur automatischen Reinigung der Gasdüse 3 eines Schweißbrenners einer automatischen Schutzgasschweißanlage dargestellt. Die Reinigungsstation umfasst, wie bereits erwähnt, ein Paar Klemmbacken 4, die mittels eines pneumatischen Zylinders 4a aufeinander zu bewegt werden können. Die Klemmbacken 4 sind über einen ebenfalls pneumatisch betätigbaren Schwenkmechanismus aus einer vertikalen Position in eine horizontale Position (strichpunktiert dargestellt in Fig. 4) verschwenkbar.

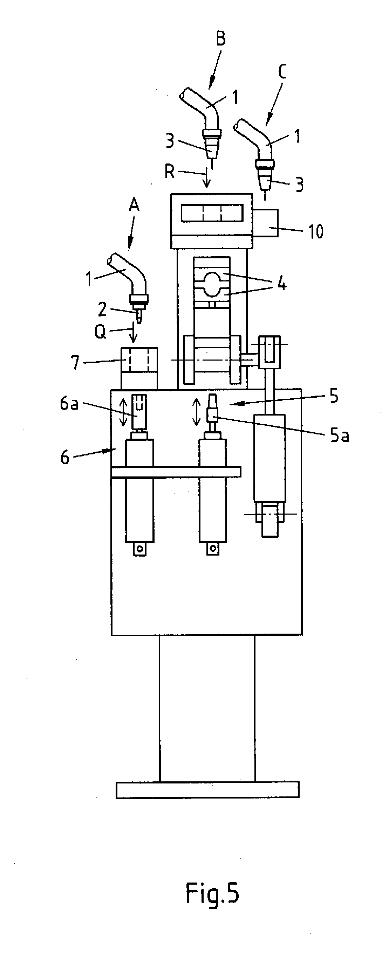

Ferner weist die Reinigungsstation eine erste mechanische Reinigungseinheit 5 auf, welche ihrerseits einen in vertikaler Richtung verfahrbaren Fräskopf 5a umfasst. Neben der ersten mechanischen Reinigungseinheit 5 ist eine zweite mechanische Reinigungseinheit 6 vorgesehen (vgl. Fig. 5), welche ebenfalls einen in vertikaler Richtung verfahrbaren Fräskopf 6a umfasst. Dieser ist jedoch vorliegend als Hohlfräser ausgebildet. Oberhalb der zweiten mechanischen Reinigungseinheit 6 ist eine Führung 7 vorgesehen, die ein durch die zweite mechanische Reinigungseinheit 6 zu reinigendes Teil zu dem Hohlfräskopf 6a in einer Horizontalebene ausrichten kann. Die Führung 7 kann ebenfalls als pneumatisch gegeneinander zustellbare Klemmbacken ausgebildet sein.

Die Reinigungsstation umfasst ferner eine Sprühvorrichtung 8 zum Auftragen eines Trennmittels, welcher mit einem entsprechenden Trennmittelreservoir 8a über eine Leitung 8b verbunden ist. Weiterhin umfasst die Reinigungsstation eine Schneideeinheit 9, in der der aus dem Kontaktrohr eines Schweißbrennerrohrs herausstehende Schweißdraht auf eine gewünschte Länge abgeschnitten werden kann. Schließlich umfasst die Reinigungsstation noch einen Sensor 10 mittels dessen der Tool-Center-Point (TCP) der automatischen Schutzgasschweißanlage neu kalibriert werden kann, falls zuvor eine Kollision des Schweißbrennerrohrs mit einem Bauteil im Wirkungsbereich des Schweißroboters erfolgt ist.

Die automatische Reinigung der Gasdüse 3 des durch den Schweißroboter 11 bewegten Schweißbrennerrohrs 1 läuft in der im Folgenden beschriebenen Weise ab:

Sobald ein für den fortgesetzten automatischen Schweißbetrieb nicht mehr akzeptabler Verunreinigungsgrad der Schweißdüse 3 des Schweißbrenners der automatischen Schweißanlage festgestellt wird, wird durch einen entsprechenden Steuerungsbefehl eine automatische Gasdüsenreinigung eingeleitet. Der Steuerungsbefehl wird bevorzugt von der (in den Fig. 4 und 5 nicht dargestellten) Robotersteuerung an die Steuerung der erfindungsgemäßen Reinigungsstation (ebenfalls nicht dargestellt) geleitet.

Beim Start der automatischen Reinigung bewegt der Schweißroboter 11 das Schweißbrennerrohr 1 derart in Richtung der Reinigungsstation, dass die Gasdüse 3 in den Raum zwischen den Klemmbacken 4 der Reinigungsstation eingeführt wird. Sodann werden die Klemmbacken 4 derart aufeinander zubewegt, dass die Gasdüse 3 fest fixiert wird. Im Anschluss daran zieht der Schweißroboter 11 das Schweißbrennerrohr 1 zurück, so dass sich die Verbindung zwischen der Gasdüse 3 und dem Schweißbrennerrohr 1 löst. Anschließend werden die die Gasdüse 3 haltenden Klemmbacken 4 in die horizontale Position verschwenkt, so dass die Gasdüse 3 sich oberhalb des Fräskopfes 5a der ersten mechanischen Reinigungseinheit 5 befindet (s. Einzelheit Y). Zur Reinigung der verunreinigten Innenfläche der Gasdüse 3 wird der durch einen nicht dargestellten Antrieb in Rotation versetzte Fräskopf 5a derart nach oben bewegt, dass er in die Gasdüse 3 hineinragt und die dort vorhandenen Verunreinigungen abreinigen kann. Somit ist es möglich, die konische Innenfläche 3b der Gasdüse 3 problemlos vollständig zu reinigen, da im Unterschied zum Stand der Technik die Gasdüse 3 von der dem Schweißbrennerrohr 1 zugewandten großen Öffnung 3d her zugänglich ist.

Vorzugsweise zeitgleich mit der Reinigung der Innenfläche 3b der Gasdüse 3 kann eine Reinigung des nunmehr freiliegenden Kontaktrohrs 2 des Schweißbrenners erfolgen. Hierzu bewegt der Schweißroboter 11 das Schweißbrennerrohr 1 in eine erste Position A (vgl. Fig. 5), in der das freiliegende Kontaktrohr 2 sich weit oberhalb der zweiten mechanischen Reinigungseinheit 6 befindet. Sodann wird entsprechend dem Pfeil Q das Schweißbrennerrohr 1 durch den Schweißroboter 11 (jeweils nicht dargestellt in Fig. 5) derart nach unten bewegt, dass sich das Kontaktrohr 2 innerhalb der Führung 7 befindet und somit in einer Horizontalebene korrekt zum Hohlfräskopf 6a der zweiten mechanischen Reinigungseinheit 6 ausgerichtet ist. Anschließend wird der Hohlfräskopf 6a derart nach oben bewegt, dass er die Außenfläche des verunreinigten Kontaktrohrs 2 reinigt. Es versteht sich dabei, dass die Reinigung des Kontaktrohrs 2 auch nach oder vor der Reinigung der Innenfläche 3b der Gasdüse 3 durch die erste Reinigungseinheit 5 erfolgen kann. Entscheidend ist allein, dass hierzu die Gasdüse 3 vom Schweißbrennerrohr 1 getrennt worden ist.

Nach erfolgter Reinigung der Gasdüse 3 werden die Klemmbacken 4 mit der gereinigten Gasdüse 3 wieder in die vertikale Position hoch geschwenkt. Sodann nähert sich das Schweißbrennerrohr 1 wieder der in den Klemmbacken 4 gereinigten Gasdüse 3, bis die Verbindung zwischen der Gasdüse 3 und dem Schweißbrennerrohr 1 durch Aufwenden einer axialen Kraft wiederhergestellt ist. Anschließend kann auf die Innenfläche 3b der Gasdüse 3 und auf das von der Gasdüse 3 umgebende Kontaktrohr 2 ein Trennmittel aufgetragen werden, welches die Anlagerung weiterer Verunreinigungen im fortgesetzten Schweißprozess verzögert. Bevorzugt ist die Sprühvorrichtung 8 zum Auftragen des Trennmittels fluchtend mit der in den Klemmbacken 4 gehaltenen Gasdüse 3 angeordnet, wie dies in Fig. 4 dargestellt ist. Hierdurch ist es nicht erforderlich, dass der Schweißroboter 11 für das Auftragen des Trennmittels eine weitere Zustellbewegung ausführt. Nach erfolgtem Auftragen des Trennmittels werden die Klemmbacken 4 wieder auseinander bewegt, so dass die nunmehr wieder durch das Schweißbrennerrohr 1 gehaltene Gasdüse 3 wieder freigegeben ist.

Bevor der Roboter 11 wieder in eine Bereitschafts- oder Arbeitsposition fährt, können noch weitere vorteilhafte Arbeitsschritte ausgeführt werden:

Zunächst ist es möglich, den aus dem Kontaktrohr 2 herausragenden Schweißdraht 2a auf eine für das Zünden des Lichtbogens günstige Länge, die vorzugsweise ca. 15 mm beträgt, zurechtzuschneiden und gleichzeitig einen Abbrand an der Schweißdrahtspitze zu entfernen. Hierzu wird das Schweißbrennerrohr 1 durch den Roboter 11 in eine zweite Position B verfahren, in der sich das Schweißbrennerrohr 1 direkt oberhalb der Schneidevorrichtung 9 befindet. Sodann wird das Schweißbrennerrohr 1 durch den Roboter 11 in Richtung des Pfeils R nach unten bewegt bis die Drahtspitze in den Wirkungsbereich der Schneidevorrichtung 9 gelangt, woraufhin der Draht 2a auf eine korrekte Länge abgeschnitten wird.

Weiterhin ist es noch möglich, vor dem Anfahren der Bereitschaftsposition den Tool-Center-Point (TCP) der automatischen Schutzgasschweißanlagen im Falle einer stattgehabten Kollision neu zu kalibrieren. Hierzu wird das Schweißbrennerrohr 1 in eine dritte Position C bewegt, in der der an der Reinigungsstation vorgesehene Sensor 10 eine Rekalibrierung vornimmt. Sobald dies erfolgt ist, bewegt sich der Roboter in die Bereitschaftsposition, um nach Erhalt eines entsprechenden Befehls der nicht dargestellten Robotersteuerung den Schweißprozess wieder aufzunehmen.

## Patentansprüche

1. Reinigungsstation zur automatischen Reinigung der Gasdüse (3) eines Schweißbrenners einer automatischen Schweißanlage, insbesondere einer automatischen Schutzgasschweißanlage, mit Haltemitteln (4) zum Fixieren der zu reinigenden Gasdüse (3) und mit wenigstens einer Reinigungseinheit (5) zur Reinigung der Innenfläche (3b) der zu reinigenden Gasdüse (3), wobei die wenigstens eine Reinigungseinheit (5) als mechanische Reinigungseinheit ausgebildet ist und die die Gasdüse (3) fixierenden Haltemittel (4) und die wenigstens eine Reinigungseinheit (5) derart relativ zueinander ausrichtbar sind, dass die wenigstens eine Reinigungseinheit (5) in das mit dem Schweißbrennerrohr (1) des Schweißbrenners verbindbare offene Ende (3d) der Gasdüse (3) zwecks Reinigung der Innenfläche (3b) der Gasdüse (3) einführbar ist,
**dadurch gekennzeichnet, dass**
die Haltemittel (4) von einer ersten Position, in der die zu reinigende Gasdüse (3) durch die Haltemittel (4) aufgenommen wird, in eine zweite Position, in der die mechanische Reinigungseinheit (5) in die Gasdüse eingeführt wird, verschwenkbar sind.

2. Reinigungsstation nach Anspruch 1,
**dadurch gekennzeichnet, dass**
die Reinigungsstation eine Steuereinheit umfasst, wobei die Steuereinheit mit einer Steuereinheit der automatischen Schweißanlage verbindbar ist zum Zwecke der gemeinsamen Steuerung der Schweißanlage und der Reinigungsstation über die Steuereinheit der Schweißanlage.

3. Reinigungsstation nach Anspruch 1 oder 2,
**dadurch gekennzeichnet, dass**
die Haltemittel als pneumatisch, elektrisch oder hydraulisch betätigbare Klemmbacken (4) ausgebildet sind.

4. Reinigungsstation nach einem der Ansprüche 1 bis 3,
**dadurch gekennzeichnet, dass**
die wenigstens eine Reinigungseinheit (5) als Fräskopf (5a) ausgebildet ist.

5. Reinigungsstation nach einem der Ansprüche 1 bis 4,
**dadurch gekennzeichnet, dass**
die wenigstens eine Reinigungseinheit (5) als Draht oder Bürste ausgebildet ist.

6. Reinigungsstation nach einem der Ansprüche 1 bis 5,
**dadurch gekennzeichnet, dass**
die Reinigungsstation wenigstens eine weitere mechanische Reinigungseinheit (6) zur Reinigung der Außenfläche des Kontaktrohrs (2) des Schweißbrenners umfasst.

7. Reinigungsstation nach Anspruch 6,
**dadurch gekennzeichnet, dass**
die wenigstens eine weitere mechanische Reinigungseinheit (6) als Fräskopf (6a) ausgebildet ist.

8. Reinigungsstation nach Anspruch 7,
**dadurch gekennzeichnet, dass**
die wenigstens eine weitere mechanische Reinigungseinheit (6) als Draht oder Bürste ausgebildet ist.

9. Reinigungsstation nach einem der Ansprüche 1 bis 8,
**dadurch gekennzeichnet, dass**
die Reinigungsstation eine Einheit (8) zum Auftragen eines Trennmittels auf die Innenfläche (3b) der Gasdüse (3) und/oder die Außenfläche des Kontaktrohrs (2) des Schweißbrenners umfasst.

10. Reinigungsstation nach Anspruch 9,
**dadurch gekennzeichnet, dass**
die Einheit zum Auftragen eines Trennmittels als Sprühvorrichtung (8) ausgebildet ist.

11. Reinigungsstation nach Anspruch 10,
**dadurch gekennzeichnet, dass**
die Sprühvorrichtung (8) fluchtend mit den die Gasdüse (3) fixierenden Haltemitteln (4) angeordnet ist.

12. Reinigungsstation nach einem der Ansprüche 1 bis 11,
**dadurch gekennzeichnet, dass**
die Reinigungsstation eine Vorrichtung (9) zum Abschneiden eines Teils des aus dem Kontaktrohr (2) herausragenden Schweißdrahtendes (2a) umfasst.

13. Reinigungsstation nach einem der Ansprüche 1 bis 12,
**dadurch gekennzeichnet, dass**
die Reinigungsstation eine Einheit (10) zur Rekalibrierung des Tool-Center-Points (TCP) der automatischen Schweißanlage umfasst.

14. Reinigungsstation nach Anspruch 13,
**dadurch gekennzeichnet, dass**
die Einheit als optischer Sensor (10) ausgebildet ist.

15. Verfahren zur automatischen Reinigung der Gasdüse (3) eines Schweißbrenners einer automatischen Schweißanlage, insbesondere einer Schweißanlage nach einem der Ansprüche 26 bis 32, in einer Reinigungsstation, insbesondere einer Reinigungsstation nach einem der Ansprüche 1 bis 14, wobei in dem Schweißbrenner die Gasdüse (3) lösbar mit einem Schweißbrennerrohr (1) des Schweißbrenners verbunden ist und ein in koaxialer Verlängerung des Schweißbrennerrohrs (1) angeordnetes Kontaktrohr (2) koaxial umgibt **gekennzeichnet durch** folgende Schritte:
- Einführen der mit dem Schweißbrennerrohr (1) verbundenen Gasdüse (3) in an der Reinigungsstation vorgesehene Haltemittel (4),
- Einklemmen der Gasdüse (3) in den Haltemitteln (4), wobei die Haltemittel (4) sich in einer ersten Position befinden, Lösen der Verbindung zwischen Gasdüse (3) und Schweißbrennerrohr (1) und Abziehen des Schweißbrennerrohrs (1), wobei die Gasdüse (3) **durch** die Haltemittel (4) weiter gehalten wird,
- Verschwenken der Haltemittel (4) aus der ersten Position in eine zweite Position,
- Einführen wenigstens einer an der Reinigungsstation vorgesehenen mechanischen Reinigungseinheit (5) in das mit dem Schweißbrennerrohr (1) des Schweißbrenners verbindbare offene Ende (3d) der Gasdüse (3), Reinigung der Innenfläche (3b) der Gasdüse (3), Verschwenken der Haltemittel (4) zurück in die erste Position und anschließendes Herausbewegen der wenigstens einen Reinigungseinheit(5) aus der gereinigten Gasdüse (3),
- Wiederherstellen der Verbindung zwischen dem Schweißbrennerrohr (1) und der Gasdüse (3)
- Lösen der Klemmverbindung zwischen der Gasdüse (3) und den Haltemitteln (4) und
- Bewegen des Schweißbrennerrohrs (1) in eine Bereitschafts- oder Arbeitsposition.

16. Verfahren nach Anspruch 15,
**dadurch gekennzeichnet, dass**
die Auslösung und Steuerung des Verfahrens über die die automatische Schweißanlage steuernde Steuereinheit erfolgt.

17. Verfahren nach Anspruch 15 oder 16,
**dadurch gekennzeichnet, dass**
die Verbindung zwischen der Gasdüse (3) und dem Schweißbrennerrohr (1) nach Art einer Schnappverbindung durch eine axial an der Verbindung angreifende Kraft gelöst und geschlossen wird.

18. Verfahren nach einem der Ansprüche 15 bis 17,
**dadurch gekennzeichnet, dass**
die Haltemittel (4) vor dem Einführen der mechanischen Reinigungseinheit (5) in das mit dem Schweißbrennerrohr (1) des Schweißbrenners verbindbare offene Ende (3d) der Gasdüse (3) in eine Reinigungsstellung verschwenkt werden.

19. Verfahren nach einem der Ansprüche 15 bis 18,
**dadurch gekennzeichnet, dass**
die Außenfläche des Kontaktrohrs (2) des Schweißbrenners durch wenigstens eine weitere an der Reinigungsstation vorgesehene mechanische Reinigungseinheit (6) gereinigt wird.

20. Verfahren nach Anspruch 19,
**dadurch gekennzeichnet, dass**
die Reinigung der Außenfläche des Kontaktrohrs (2) im Wesentlichen zeitgleich zur Reinigung der Gasdüse (3) erfolgt.

21. Verfahren nach einem der Ansprüche 15 bis 20,
**dadurch gekennzeichnet, dass**
nach dem Wiederherstellen der Verbindung zwischen dem Schweißbrennerrohr (1) und der Gasdüse (3) ein Trennmittel auf die Innenfläche (3b) der Gasdüse (3) und auf das Kontaktrohr (2) aufgetragen wird.

22. Verfahren nach Anspruch 21,
**dadurch gekennzeichnet, dass**
das Trennmittel aufgesprüht wird.

23. Verfahren nach Anspruch 21 oder 22,
**dadurch gekennzeichnet, dass**
der Trennmittelauftrag nach dem Lösen der Klemmverbindung zwischen der Gasdüse (3) und den Haltemitteln (4) und einem anschließenden Verschwenken des Schweißbrennerrohrs (1) erfolgt.

24. verfahren nach einem der Ansprüche 15 bis 23,
**dadurch gekennzeichnet, dass**
ein Teil des aus dem Kontaktrohr (2) herausstehenden Schweißdrahtes (2a) abgeschnitten wird.

25. Verfahren nach einem der Ansprüche 15 bis 24,
**dadurch gekennzeichnet, dass**
der Tool-Center-Point (TCP) der automatischen Schweißanlage durch eine an der Reinigungsstation vorgesehene Kalibriereinheit rekalibriert wird.

26. Automatische Schweißanlage umfassend ein Mehrachsen-Handhabungssystem, insbesondere einen Schweißroboter (11), eine das Mehrachsen-Handhabungssystem steuernde Steuereinheit und einen durch das Mehrachsen-Handhabungssystem geführten Schweißbrenner, wobei der Schweißbrenner ein Schweißbrennerrohr (1), ein in koaxialer Verlängerung des Schweißbrennerrohrs (1) angeordnetes Kontaktrohr (2) und eine das Kontaktrohr (2) koaxial umgebende, lösbar mit dem Schweißbrennerrohr (1) verbundene Gasdüse (3) umfasst,
**dadurch gekennzeichnet, dass**
die Verbindung zwischen der Gasdüse (3) und dem Schweißbrennerrohr (1) nach Art einer Schnappverbindung ausgebildet ist, wobei die Verbindung durch eine axial an der Verbindung angreifende Kraft lösbar und schließbar ist.

27. Schweißanlage nach Anspruch 26,
**dadurch gekennzeichnet, dass**
das Schweißbrennerrohr (1) ein erstes Kupplungselement (1c) umfasst, welches ein an der Gasdüse (3) vorgesehenes zweites Kupplungselement (3c) aufnimmt.

28. Schweißanlage nach Anspruch 27,
**dadurch gekennzeichnet, dass**
das erste Kupplungselement (1c) eine konisch zulaufende Innenfläche und das zweite Kupplungselement (3c) eine dazu entsprechend konisch zulaufende Außenfläche aufweist.

29. Schweißanlage nach Anspruch 27 oder 28,
**dadurch gekennzeichnet, dass**
das erste Kupplungselement (1c) als Muffe mit einem inneren Federring (1c*) ausgebildet ist, wobei an dem zweiten Kupplungselement (3c) eine Ringnut (3c*) vorgesehen ist, in die der Federring (1c*) einrasten kann.

30. Schweißanlage nach einem der Ansprüche 26 bis 29,
**dadurch gekennzeichnet, dass**
die Gasdüse (3) ein konisch zulaufendes Gasaustrittsende (3a) aufweist.

31. Schweißanlage nach einem der Ansprüche 26 bis 30,
**dadurch gekennzeichnet, dass**
die Schweißanlage als MIG/MAG-Schweißanlage, ausgebildet ist, wobei ein Schweißdraht (2a) durch das Kontaktrohr (2) geführt wird.

32. Schweißanlage nach einem der Ansprüche 26 bis 31,
**dadurch gekennzeichnet, dass**
die Schweißanlage als WIG-Schweißanlage, ausgebildet ist, wobei die wolframelektrode in dem Kontaktrohr (2) gehalten ist.
